Europäisches Patentamt

(19) European Patent Office

Office européen des brevets

(11) **EP 1 020 652 B1**

(12) **EUROPÄISCHE PATENTSCHRIFT**

(45) Veröffentlichungstag und Bekanntmachung des Hinweises auf die Patenterteilung:
**25.08.2004 Patentblatt 2004/35**

(51) Int Cl.⁷: **F16B 35/04**, F16B 31/00

(21) Anmeldenummer: **99125698.3**

(22) Anmeldetag: **23.12.1999**

(54) **Verbindungselement für zwei Maschinen- oder Bauteile, insbesondere Pass-Dehnschraube, Pass-Gewindebolzen o.dgl.**

Fastening element for two machine parts or structural members, especially extensible-fit, screw-fit threaded bolt, etc

Elément de fixation pour deux organes de machine ou deux pièces de construction, notamment vis d'ajustage extensible, boulon d'ajustage, etc

(84) Benannte Vertragsstaaten:
**AT BE CH CY DE DK ES FI FR GB GR IE IT LI LU MC NL PT SE**

(30) Priorität: **12.01.1999 DE 19900791**

(43) Veröffentlichungstag der Anmeldung:
**19.07.2000 Patentblatt 2000/29**

(73) Patentinhaber: **Kamax-Werke Rudolf Kellermann GmbH & Co. KG 37520 Osterode am Harz (DE)**

(72) Erfinder:
• **Hartmann, Gunther, Dr.-Ing. 36304 Alsfeld (DE)**

• **Sommer, Wolfgang, Dipl.-Ing. 35285 Gemünden (Wohra) (DE)**

(74) Vertreter: **Patentanwälte Rehberg + Hüppe Postfach 31 62 37021 Göttingen (DE)**

(56) Entgegenhaltungen:
**EP-A- 0 313 927        DE-U- 29 504 559**

• **"VERBUS KONSTRUKTIONSTEILE., ANNOUNCEMENT" VERBUS, INBUS, BAUER & SCHAUTER KARCHER, 1985, Seiten 1-12, XP000319460**

**Beschreibung**

Die Erfindung betrifft ein Verbindungselement für mindestens zwei Maschinen- oder Bauteile, insbesondere Paß-Dehnschraube, Paß-Gewindebolzen o. dgl., mit einem Schaft, der mindestens einen der Befestigung dienenden Gewindeabschnitt, mindestens einen Dehnabschnitt und mindestens einen aus Wulsten und Rillen bestehenden Paßabschnitt aufweist, wobei der Paßabschnitt gegenüber dem Dehnabschnitt axial versetzt am Schaft vorgesehen ist. Die Wulste und Rillen des Paßabschnittes können steigungslos umlaufend oder steigungsbehaftet ausgebildet sein. Als Paß-Dehnschraube ist das Verbindungselement mit einem Kopf versehen. Als Paß-Gewindebolzen weist das Verbindungselement ein zusätzliches Festschraubgewinde auf.

Verbindungselemente dieser Art, also insbesondere Paß-Dehnschrauben, werden bestimmungsgemäß eingesetzt, wenn sie mit vergleichsweise großen Vorspannkräften angezogen werden, um bei den miteinander verschraubten Teilen, z. B. den Lagerteilen von Pleuelstangen, unter Betriebsbedingungen ein Aufklappen der Teilfuge zu vermeiden. Zur Erzielung der erforderlichen großen Vorspannkraft werden solche Paß-Dehnschrauben über ihren elastischen Grenzbereich in den plastischen Bereich hinein verformt. Dies geschieht beim Anziehen der Paß-Dehnschrauben. Dieser Anziehvorgang wird drehwinkelgesteuert oder streckgrenzgesteuert durchgeführt.

Aus der EP 0 313 927 A1 ist ein Verbindungselement für zwei Maschinen- oder Bauteile in Form einer Paß-Dehnschraube bekannt. Die Paß-Dehnschraube besitzt einen Kopf zur Übertragung des Drehmoments und einen Schaft, der mindestens einen der Befestigung dienenden Gewindeabschnitt, mindestens einen Dehnabschnitt und mindestens einen aus Wulsten und Rillen bestehenden Paßabschnitt aufweist. Der Gewindeabschnitt, der Dehnabschnitt und der Paßabschnitt sind axial versetzt zueinander am Schaft der Paß-Dehnschraube angeordnet. Auch der Dehnabschnitt besteht aus Wulsten und Rillen. Die Wulste und Rillen des Paßabschnitts und des Dehnabschnitts sind verschieden, aber jeweils gewindeartig ausgebildet. Der Kerndurchmesser der Rillen des Paßabschnittes ist größer als der Kerndurchmesser der Rillen des Dehnabschnittes bemessen, vorzugsweise um mindestens 10 %. Damit wird bei einer Verformung der Paß-Dehnschraube in den überelastischen Bereich hinein, also beim Anziehen der Paß-Dehnschraube über den elastischen Grenzbereich in den plastischen Bereich hinein, im Paßabschnitt eine plastische Querkontraktion, also eine Durchmesserreduzierung, vermieden. Der Außendurchmesser des Paßabschnitts ist größer als der Außendurchmesser des Dehnabschnitts und natürlich auch größer als der Außendurchmesser des Gewindeabschnitts. Die Herstellung dieser Paß-Dehnschraube kann ausgehend von einem Schaft mit über die Länge konstantem Durchmesser durch axiale Materialverdrängung und dadurch bewirkte Vergrößerung der Außendurchmesser der Wulste erfolgen. Die axiale Breite am Außendurchmesser der Wulste ist relativ klein und zudem im Paßabschnitt noch kleiner als im Dehnabschnitt. Damit ist der Traganteil des Paßabschnittes in nachteiliger Weise klein. Für die Aufnahme von Querkräften im Paßabschnitt stehen nur minimale Flächen zur Verfügung. Die Gestaltung des Dehnabschnittes in Form von nebeneinanderliegenden Wulsten und Rillen erbringt den Nachteil geringer Dauerfestigkeit und verminderter dynamischer Eigenschaften.

Aus der DE-OS 2 143 784 ist eine Paß-Dehnschraube bekannt, bei der die Funktion des Paßabschnitts und die Funktion des Dehnabschnitts durch einen gemeinsamen Abschnitt des Schaftes der Schraube erbracht werden. Der Schaft weist hierzu ein Paßgewinde auf, also eine steigungsbehaftete Anordnung der Wulste und Rillen in dem Paß-Dehnabschnitt. Der Kerndurchmesser des Paß-Dehnabschnittes ist 2 bis 10 % kleiner als der Kerndurchmesser des Befestigungsabschnitts bemessen. Dadurch wird die elastische Dehnung und die Dauerfestigkeit der Paß-Dehnschraube verbessert. Beim Anziehen einer solchen Paß-Dehnschraube über den elastischen Grenzbereich hinaus tritt eine axiale Dehnung und Längung im Bereich des Paß-Dehnabschnitts in Verbindung mit einer bleibenden Reduzierung des Außendurchmessers auf. Der Paß-Dehnabschnitt verliert die Funktion des Paßabschnitts und die Wiederverwendbarkeit der Paß-Dehnschraube ist beeinträchtigt.

Aus der EP 0 144 503 B1 ist eine Paß-Dehnschraube mit einem Schaft bekannt, der einen der Befestigung dienenden Gewindeabschnitt und einen Paß-Dehnabschnitt aufweist. Auf dem Paß-Dehnabschnitt sind die Wulste und Rillen steigungslos angeordnet. Der Außendurchmesser der Wulste im Paß-Dehnabschnitt ist um 0,1 bis 0,5 mm größer als der Außendurchmesser im Gewindeabschnitt bemessen. Der Spannungsquerschnitt entsprechend dem Kerndurchmesser der Rillen im Paß-Dehnabschnitt ist gleich groß wie der Spannungsquerschnitt des Gewindeabschnitts gestaltet. Damit soll eine Paß-Dehnschraube geschaffen werden, die lediglich im Bereich der elastischen Dehnung genutzt wird und bei der während der Zugbeanspruchung keine Dehnungssprünge oder -risse auftreten und eine Erweiterung der Gleichmaßdehnung erzielt wird.

Der Erfindung liegt die Aufgabe zugrunde, ein Verbindungselement der eingangs beschriebenen Art bereitzustellen, welches einerseits hervorragende elastische Dehneingenschaften und damit entsprechende dynamische Dauerhaltbarkeiten aufweist, aber andererseits beim Anziehen des Verbindungselementes über den elastischen Grenzbereich hinaus in den plastischen Bereich hinein eine bleibende plastische Einschnürung des Außendurchsmessers der Wulste im Paßabschnitt vermieden wird, so daß die Paß-Dehnschraube mehrfach verwendbar ist.

Erfindungsgemäß wird dies bei einem Verbindungselement der eingangs beschriebenen Art dadurch erreicht, daß der Spannungsquerschnitt des Dehnabschnitts kleiner als der Spannungsquerschnitt des Gewindeabschnitts bemessen ist, daß der aus dem Kerndurchmesser der Rillen berechnete Spannungsquerschnitt des Paßabschnitts um mindestens 20 % größer als der Spannungsquerschnitt des Dehnabschnitts bemessen ist, und daß der aus dem Kerndurchmesser der Rillen berechnete Spannungsquerschnitt des Paßabschnitts um mindestens 20 % größer als der Spannungsquerschnitt des Gewindeabschnitts bemessen ist.

Die Erfindung geht zunächst einmal von dem Gedanken aus, den Paßabschnitt und den Dehnabschnitt am Schaft des Verbindungselements nicht nur axial versetzt zueinander anzuordnen, sondern auch vergleichsweise mehr als bisher funktionell zu trennen. Zu diesem Zweck werden der Gewindeabschnitt, der Dehnabschnitt und der Paßabschnitt am Schaft des Verbindungselementes in besonderer Weise gestaltet und dimensioniert. Diese drei Abschnitte sind aufeinander und zueinander abgestimmt. Die Dehneigenschaften des Verbindungselementes, insbesondere bei dynamischer Beanspruchung, werden im wesentlichen von dem Dehnabschnitt erbracht. Hierzu wird der Spannungsquerschnitt des Dehnabschnitts kleiner als der Spannungsquerschnitt des Gewindeabschnitts bemessen. Andererseits wird darauf geachtet, daß der Paßabschnitt keine nennenswerte Dehnfunktion erbringt, sondern die für die Passung wichtigen Eigenschaften dauerhaft beibehält, so daß auch bei einem Anziehen über den elastischen Grenzbereich hinaus diese Paßeigenschaften beibehalten bleiben, so daß die Wiederverwendbarkeit des Verbindungselementes gegeben ist. Hierzu wird der Spannungsquerschnitt des Paßabschnittes um mindestens 20 % größer als der Spannungsquerschnitt des Dehnabschnitts bemessen. Der Spannungsquerschnitt des Paßabschnitts $A_R$ berechnet sich nach der Formel

$$(X) \qquad A_R = \P/4 * d_{3R}{}^2,$$

wobei sich dieser Spannungsquerschnitt aus dem Kerndurchmesser des Paßabschnitts ergibt.

Auch der Spannungsquerschnitt des Dehnabschnitts $A_T$ ergibt sich nach der Formel

$$(Y) \qquad A_T = \P/4 * d_T{}^2,$$

wobei der Durchmesser $D_T$ des Dehnabschnitts bzw. der Kerndurchmesser eines mit Wulsten oder Rillen behafteten Dehnabschnitts in die Berechnung Eingang findet.

Der Dehnabschnitt und der Paßabschnitt werden nun im Verhältnis zueinander so dimensioniert bzw. festgelegt, daß der Spannungsquerschnitt des Paßabschnitts um mindestens 20 % größer als der Spannungsquerschnitt des Dehnabschnitts ist, also die Formel

$$(A) \qquad A_R \geq 1{,}2 * A_T$$

gilt. Damit wird das Verhältnis des Kerndurchmessers des Paßabschnitts zu dem Durchmesser bzw. Kerndurchmesser des Dehnabschnitts festgelegt. Gleichzeitig muß der Spannungsquerschnitt des Paßabschnitts um mindestens 20 % größer als der Spannungsquerschnitt des Gewindeabschnitts bemessen sein. Der Spannungsquerschnitt $A_S$ des Gewindes berechnet sich nach der Formel

$$(Z) \qquad A_S = \frac{\P}{4} \left( \frac{d_2 + d_3}{2} \right)^2$$

woraus erkennbar wird, daß in die Berechnung des Spannungsquerschnitts $A_S$ des Gewindes sowohl der Flankendurchmesser wie auch der Kerndurchmesser des Gewindeabschnitts eingehen. Damit ist der Spannungsquerschnitt $A_R$ des Dehnabschnitts relativ zum Spannungsquerschnitt des Gewindeabschnitts nach der Formel

$$(B) \qquad A_R \geq 1{,}2 * A_S$$

festgelegt. Anders ausgedrückt ist der Spannungsquerschnitt des Dehnabschnitts auf jeden Fall kleiner als der Spannungsquerschnitt des Paßabschnitts und auch kleiner oder gleich dem Spannungsquerschnitt des Gewindeabschnitts. Insbesondere wenn der Dehnabschnitt ohne Wulste und Rillen, also axial zylindrisch durchgehend ausgebildet ist, besitzt das Verbindungselement neben einem hervorragenden elastischen Verhalten den Vorteil einer erhöhten Dauerfestigkeit, da die Dehnung und Längung im wesentlichen auf den Dehnabschnitt beschränkt ist und dort keine profilbedingten Kerbwirkungseinflüsse auftreten. Solche Verbindungselemente bieten die Möglichkeit, eine hohe Verformungsarbeit aufzunehmen. Sie besitzen eine vergrößerte Sicherheit gegen Bruch. Gleichzeitig wird die Dauerfestigkeit unter dynamischer Beanspruchung gesteigert. So liegt der Spannungsausschlag der Dauerhaltbarkeit von Verbindungselementen mit nicht profiliertem Dehnabschnitt um mehr als 10 % über den Werten bekannter Paß-Dehnschrauben, bei denen der Dehnabschnitt Wulste und Rillen aufweist.

Es ist also besonders vorteilhaft, wenn der Dehnabschnitt ohne Wulste und Rillen axial zylindrisch durchgehend ausgebildet ist. Damit wird eine optimale elastisch/plastische Nachgiebigkeit erreicht. Paß-Dehnschrauben mit nicht profiliertem Dehnabschnitt zeigen ein hervorragendes Anzugsverhalten im überelastischen Bereich. Aufgrund der geringen Differenz zwischen ihrer Schraubenkraft $F_{p0,2}$ der 0,2% Dehngrenze und der Höchstzugkraft $F_{max}$ der Schraube (flacher Kurvenverlauf im Kraft-Weg-Diagramm) lassen sie sich mit sehr geringen Vorspannkraftstreuungen überelastisch montieren.

Insbesondere kann der Spannungsquerschnitt des Dehnabschnitts um bis zu 30 % kleiner als der Spannungsquerschnitt des Gewindeabschnitts bemessen sein. Damit ergibt sich das Verhältnis zwischen dem Spannungsquerschnitt $A_T$ des Dehnabschnitts zu dem Spannungsquerschnitt $A_s$ des Gewindeabschnitts nach der Formel

$$(C) \qquad A_T = 0{,}7...0{,}99 * A_S.$$

Bei einem derart ausgebildeten Verbindungselement ergibt sich neben dem Vorteil eines guten elastischen Verhaltens auch eine erhöhte Dauerfestigkeit.

Wichtig ist es in diesem Zusammenhang, daß der Paßabschnitt einen Flächentraganteil von mindestens 25 % bezogen auf einen zylindrischen Abschnitt gleichen Durchmessers und gleicher Länge aufweist. Um die beschriebenen Abhängigkeiten der Spannungsquerschnitte einzuhalten, muß folgende Beziehung erfüllt sein:

$$(D) \qquad d_{fR} \geq 1{,}1 * d_T$$

Der Ausgangsdurchmesser $D_{fR}$ des Paßabschnitts, also beispielsweise der Rolldurchmesser, ist mehr als 10 % größer als der Durchmesser des Dehnabschnitts im fertigen Zustand.

Der Außendurchmesser der Wulste des Paßabschnitts kann bis zu 20 % größer als der Außendurchmesser des Gewindeabschnitts bemessen sein. Es gilt also die Formel

$$(E) \qquad d_R = 1...1{,}2 * d .$$

Für die Ausbildung der Wulste und Rillen des Paßabschnitts ergeben sich verschiedene Möglichkeiten. Eine erste Möglichkeit besteht darin, daß die Wulste und Rillen des Paßabschnitts umlaufend ausgebildet sind. Es handelt sich also um einzelne umlaufend mit regelmäßiger Teilung angeordnete Wulste bzw. Rillen, die nicht ineinander übergehen. Eine andere Möglichkeit besteht darin, daß die Wulste und Rillen des Paßabschnitts als steigungsbehaftetes ein- oder mehrgängiges Wendelprofil ausgebildet sind. Auch dabei muß natürlich darauf geachtet werden, daß der Tragflächenanteil mindestens 25 % beträgt.

Die axiale Länge des Dehnabschnitts wird mit mindestens 40 % der Klemmlänge des Verbindungselements im Gewindeabschnitt bemessen. Die genutzte Klemmlänge $l_K$ des Gewindeabschnitts richtet sich nach der Ausbildung desjenigen Elements, mit welchem das Verbindungselement in Kontakt kommt. Beispielsweise kann dies eine zu der Paß-Dehnschraube gehörige Mutter sein. Aus der Klemmlänge $l_K$ ergibt sich die Länge des Dehnabschnitts nach der Formel

$$(F) \qquad l_T \geq 0{,}4 * l_K .$$

Das Verbindungselement läßt sich vorteilhaft herstellen, indem die Wulste und Rillen des Paßabschnitts spanlos durch Kaltumformen und Kalibrieren geformt sind. Die Wulste des Paßabschnitts werden durch Walzen, Profilrollen oder Aufstauchen des Schafts zwischen Dehnabschnitt und Gewindeabschnitt vorgefertigt. Nach der Wärmebehandlung der Teile erfolgt die Fertigbearbeitung unter Einhaltung der beschriebenen Abhängigkeiten durch ebenfalls umformtechnische Bearbeitung in Form eines Kalibrierens der Spitzen der Wulste. Dabei bleibt der Kerndurchmesser $d_{3R}$ des Paßabschnitts unbeeinflußt.

Der Dehnabschnitt des Verbindungselementes wird also spanlos gefertigt und erhält eine Nachgiebigkeit gemäß der Formel

**4**

$$(G) \qquad \delta_s = \frac{4}{\P} * \frac{l_T}{E * d_T^2} \, .$$

Diese Nachgiebigkeit $\delta_s$ wird außer durch den Elastizitätsmodul E des Werkstoffes der Paß-Dehnschraube auch durch die Länge des Dehnabschnitts sowie seinen Durchmesser bestimmt.

Die Erfindung wird anhand bevorzugter Ausführungsbeispiele weiter erläutert und beschrieben. Es zeigen:

Fig. 1    eine Seitenansicht einer Paß-Dehnschraube,

Fig. 2    eine Seitenansicht eines Paß-Gewindebolzens,

Fig. 3    eine Seitenansicht einer weiteren Paß-Dehnschraube, und

Fig. 4    eine Einzelheit der Paß-Dehnschraube nach Fig. 3.

In der nachfolgenden Figurenbeschreibung werden übereinstimmend mit der vorangehenden Beschreibung folgende Begriffssymbole mit folgender Bedeutung durchgehend benutzt:

$d$ =          Außendurchmesser des Gewindeabschnitts
$d_2$ =        Flankendurchmesser des Gewindeabschnitts
$d_3$ =        Kerndurchmesser des Gewindeabschnitts
$d_R$ =        Außendurchmesser des Paßabschnitts
$d_{fR}$ =     Ausgangsdurchmesser (Rolldurchmesser) des Paßabschnitts
$d_{3R}$ =     Kerndurchmesser des Paßabschnitts
$d_T$ =        Durchmesser des Dehnabschnitts
$K$ =          axiale Breite der Wulste am Außendurchmesser des Paßabschnitts
$l$ =          axiale Breite der Rillen am Kerndurchmesser des Paßabschnitts
$A_S$ =        Spannungsquerschnitt am Gewindeabschnitt
$A_R$ =        Spannungsquerschnitt am Paßabschnitt
$A_T$ =        Spannungsquerschnitt am Dehnabschnitt
$\delta_S$ =   Nachgiebigkeit des Dehnabschnitts
$l_T$ =        Länge des Dehnabschnitts
$l_K$ =        Klemmlänge des Verbindungselementes
$b$ =          Länge des Gewindeabschnitts
$l_R$ =        Länge des Paßabschnitts
$Fp_{0,2}$ =   Schraubenkraft an der 0,2% Dehngrenze
$F_{max}$ =    Höchstzugkraft der Schraube
$E$ =          Elastizitätsmodul des Werkstoffs der Schraube

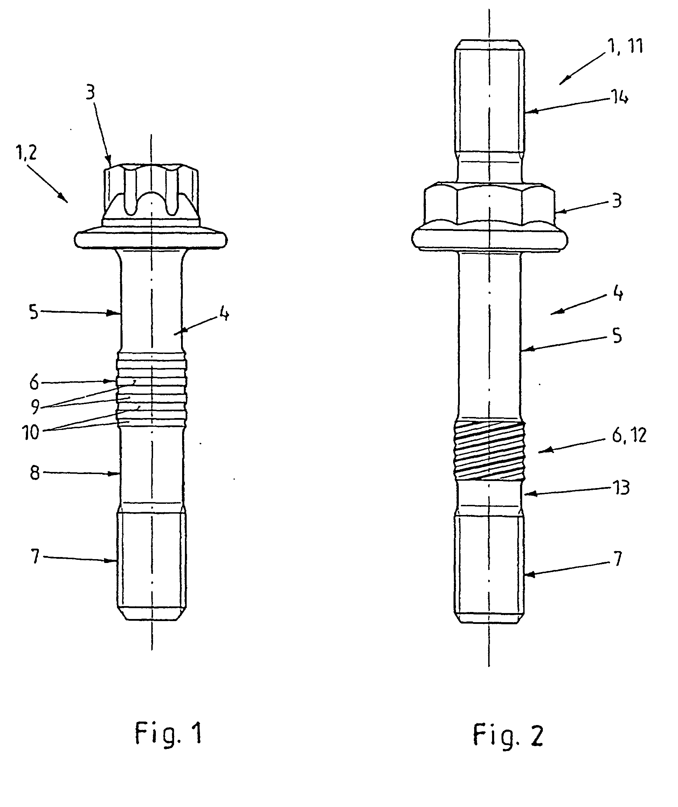

In den Zeichnungen sind Ausführungsbeispiele der Verbindungselemente 1 dargestellt. Das in Fig. 1 dargestellte Verbindungselement 1 ist als Paß-Dehnschraube 2 ausgebildet. Die Paß-Dehnschraube 2 weist einen Kopf 3 und einen Schaft 4 auf. Der Kopf 3 kann von beliebiger Gestalt sein. Seine Ausbildung im einzelnen spielt für die vorliegende Erfindung keine Rolle.

An dem Schaft 4, der sich von dem Kopf 3 bis auf das freie Ende der Paß-Dehnschraube 2 erstreckt, ist ein Dehnabschnitt 5, ein Paßabschnitt 6 und ein Gewindeabschnitt 7 vorgesehen. Diese Abschnitte 5, 6, 7 sind axial versetzt zueinander angeordnet. Es versteht sich, daß der Gewindeabschnitt 7 immer am freien Ende des Schaftes 4 angeordnet ist, während die Anordnung des Dehnabschnittes 5 und des Paßabschnittes 6 über den mittleren Bereich des Schaftes 4 zwischen Kopf 3 und Gewindeabschnitt 7 verteilt angeordnet sind. Jede Paß-Dehnschraube 2 weist mindestens einen Dehnabschnitt 5 auf. Das in Fig. 1 dargestellte Ausführungsbeispiel besitzt zusätzlich einen weiteren Dehnabschnitt 8. Die Abschnitte 5, 6, 7 und 8 sind in der aus Fig. 1 ersichtlichen Weise relativ zueinander axial versetzt angeordnet. Der Paßabschnitt 6 ist also hier beidendig von den Dehnabschnitten 5 und 8 eingeschlossen.

Die Dehnabschnitte 5 und 8 sind zylindrisch durchgehend ausgebildet. Es versteht sich, daß beim Übergang zu anderen Abschnitten Übergangsradien verwirklicht sind. Der Paßabschnitt 6 weist Wulste 9 und Rillen 10 auf. Die Wulste 9 springen nach außen vor. Die Rillen 10 treten hinter den Wulsten 9 zurück und besitzen einen vergleichsweise kleineren Durchmesser.

Fig. 2 zeigt ein Verbindungselement 1 in der Ausbildung als Paß-Gewindebolzen 11. Auch der Gewindebolzen 11 weist einen Kopf 3 und einen Schaft 4 auf. An dem Schaft 4 sind wiederum axial versetzt zueinander ein Dehnabschnitt 5, ein Paßabschnitt 6 und ein Gewindeabschnitt 7 verwirklicht. Der Paßabschnitt 6 ist hier als Wendelprofil 12 ausgebildet. Das Wendelprofil 12 kann einoder mehrgängig ausgebildet sein. Zwischen dem Wendelprofil 12 und dem Gewindeabschnitt 7 kann ein Übergangsabschnitt 13 verwirklicht sein, der eine vergleichsweise geringe axiale Erstreckung besitzt. Wie ersichtlich, ist der Dehnabschnitt 5 mit einer relativ großen axialen Länge ausgestattet.

In dieser Ausbildung des Verbindungselements 1 als Paß-Gewindebolzen 11 ist ein Festschraubgewindeabschnitt 14 vorgesehen. Der Festschraubgewindeabschnitt 14 erstreckt sich von der dem Schaft 4 abgekehrten Seite im Anschluß an den Kopf 3.

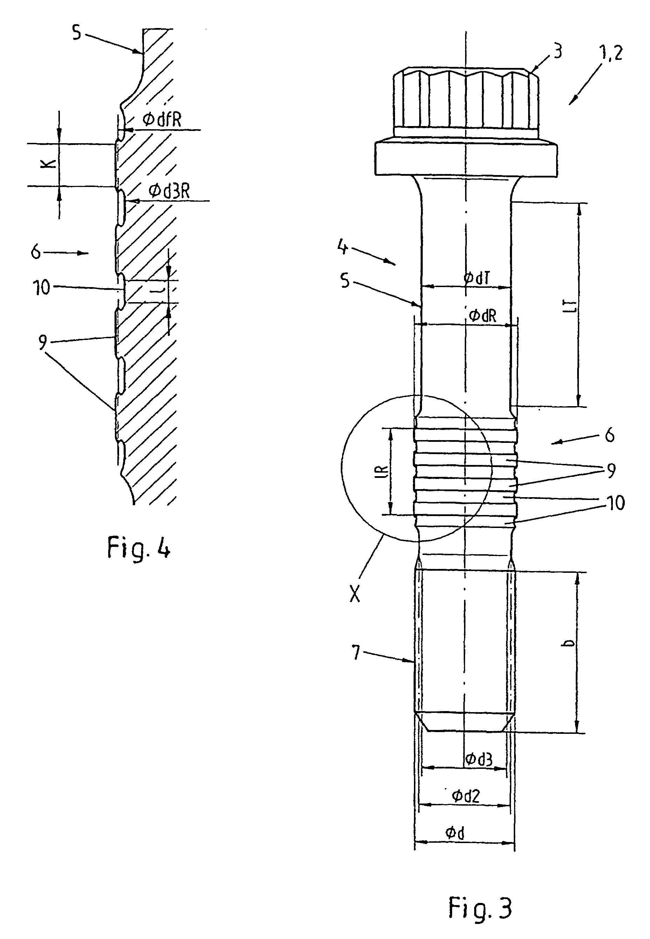

Fig. 3 zeigt eine weitere Ausführungsmöglichkeit des Verbindungselementes 1 als Paß-Dehnschraube 2. Fig. 4 verdeutlicht eine Einzelheit aus Fig. 3. In den Fig. 3 und 4 sind die in der obigen Liste angegebenen technischen Bezeichnungen für die verschiedenen Größen eingezeichnet und damit verdeutlicht, angefangen von dem Außendurchmesser d des Gewindeabschnitts 7 bis zur Länge $l_R$ des Paßabschnitts 6. Die nicht dargestellte Klemmlänge $l_K$ des Schaftes 4 ergibt sich im wesentlichen aus der Länge des Dehnabschnittes, der Länge des Paßabschnittes und einem Teil der Länge des Gewindeabschnittes, also letztlich der Höhe der miteinander zu verbindenden Bauteile. Der Außendurchmesser d des Gewindeabschnittes 7 entspricht dem Nenndurchmesser des Verbindungselementes 1 bzw. dessen Gewindeabschnitt 7. In Fig. 4 ist auch der Ausgangsdurchmesser $d_{fR}$ des Paßabschnittes 6 eingezeichnet. Dieser Durchmesser entspricht dem Rolldurchmesser, also dem Ausgangsdurchmesser des Paßabschnittes 6, bevor die Wulste 9 und Rillen 10 durch Kaltverformung hergestellt werden.

Nachfolgend wird noch ein Ausführungsbeispiel einer Paß-Dehnschraube 2 anhand einer Einzelberechnung verdeutlicht. Die geometrischen Abmessungen und die betreffenden Spannungsquerschnitte ergeben sich aufgrund der nachstehend angegebenen Formeln:

$$(X) \qquad \boxed{A_R = \frac{\pi}{4} \times d_{3R}^{\,2}}$$

$$A_R = \frac{\pi}{4} \times 8{,}85\,mm^2 = 61{,}51\,mm^2$$

$$(Y) \qquad \boxed{A_T = \frac{\pi}{4} \times d_T^{\,2}}$$

$$A_T = \frac{\pi}{4} \times 7{,}8\,mm^2 = 47{,}78\,mm^2$$

$$(Z) \qquad \boxed{A_S = \frac{\pi}{4}\left(\frac{d_2 + d_3}{2}\right)^2}$$

$$A_S = \frac{\pi}{4}\left(\frac{8{,}29\,mm + 7{,}7\,mm}{2}\right)^2 = 50{,}20\,mm^2$$

$$(A) \qquad \boxed{A_R \geq 1{,}2 \times A_T}$$

$$A_R = 61{,}51\,mm^2 = 1{,}287 \times 47{,}78\,mm^2$$

(B) $\boxed{A_R \geq 1{,}2 \times A_S}$

$$A_R = 61{,}51\,mm^2 = 1{,}225 \times 50{,}20\,mm^2$$

(C) $\boxed{A_T = 0{,}7 \ldots 0{,}99 \times A_S}$

$$A_T = 47{,}78\,mm^2 = 0{,}952 \times 50{,}20\,mm^2$$

(D) $\boxed{d_{fR} \geq 1{,}1 \times d_T}$

$$d_{fR} = 9{,}1\,mm = 1{,}167 \times 7{,}8\,mm$$

(E) $\boxed{d_R = 1 \ldots 1{,}2 \times d}$

$$d_R = 9{,}199\,mm = 1{,}032 \times 8{,}91\,mm$$

(F) $\boxed{l_T \geq 0{,}4 \times l_K}$

$$l_T = 16{,}4\,mm = 0{,}499 \times 32{,}83\,mm$$

(G) $\boxed{\delta_s = \dfrac{4}{\pi} \times \dfrac{l_T}{E \times d_T{}^2}}$

$$\delta_s = \frac{4}{\pi} \times \frac{16{,}4\,mm}{205000\,\dfrac{N}{mm^2} \times 7{,}8\,mm^2} = 1{,}674 \times 10^{-6}\,\frac{mm}{N}$$

Für dieses Beispiel gelten also die folgenden Werte:

| | |
|---|---|
| d = | 8,86 ... 8,97 mm |
| $d_2$ = | 8,25 ... 8,32 mm |
| $d_3$ = | 7,64 ... 7,75 mm |
| $d_R$ = | 9,197 ... 9,210 mm |
| $d_{fR}$ = | 9,075 ... 9,125 mm |
| $d_{3R}$ = | 8,80 ... 8,90 mm |
| $d_T$ = | 7,70 ... 7,90 mm |
| K = | 1,10 mm |
| l = | 0,60 mm |
| $A_S$ = | 50,20 mm$^2$ |
| $A_R$ = | 61,51 mm$^2$ |
| $A_T$ = | 47,78 mm$^2$ |
| $\delta_S$ = | 1,674 x 10$^{-6}$ mm/N |
| $l_T$ = | 16,40 mm |
| $l_K$ = | 32,83 mm |
| b = | 16,30 mm |
| $l_R$ = | 7,10 mm |
| $Fp_{0,2}$ = | 56,90 kN |
| $F_{max}$ = | 61,50 kN |
| E = | 205000 N/mm$^2$ |

**BEZUGSZEICHENLISTE**

1 -    Verbindungselement
2 -    Paß-Dehnschraube
3 -    Kopf
4 -    Schaft
5 -    Dehnabschnitt
6 -    Paßabschnitt
7 -    Gewindeabschnitt
8 -    Dehnabschnitt
9 -    Wulst
10 -    Rille
11 -    Paß-Gewindebolzen
12 -    Wendelprofil
13 -    Übergangsabschnitt
14 -    Festschraubgewindeabschnitt

**Patentansprüche**

**1.**  Verbindungselement (1) für mindestens zwei Maschinen- oder Bauteile, insbesondere Paß-Dehnschraube (2), Paß-Gewindebolzen (11) o.dgl., mit einem Schaft, der mindestens einen der Befestigung dienenden Gewindeabschnitt (7), mindestens einen Dehnabschnitt (5) und mindestens einen aus Wulsten (9) und Rillen (10) bestehenden Paßabschnitt (6) aufweist, wobei der Paßabschnitt (6) gegenüber dem Dehnabschnitt (5) axial versetzt am Schaft (4) vorgesehen ist, **dadurch gekennzeichnet, daß** der Spannungsquerschnitt des Dehnabschnitts (5) kleiner als der Spannungsquerschnitt des Gewindeabschnitts (7) bemessen ist, und daß der aus dem Kerndurchmesser ($d_{3R}$) der Rillen (10) berechnete Spannungsquerschnitt des Paßabschnitts (6) um mindestens 20 % größer als der Spannungsquerschnitt des Dehnabschnitts (5) bemessen ist.

**2.**  Verbindungselement nach Anspruch 1, **dadurch gekennzeichnet, daß** der Dehnabschnitt (5) ohne Wulste und Rillen axial zylindrisch durchgehend ausgebildet ist.

3. Verbindungselement nach Anspruch 1 oder 2, **dadurch gekennzeichnet, daß** der Spannungsquerschnitt des Dehnabschnitts (5) um bis zu 30 % kleiner als der Spannungsquerschnitt des Gewindeabschnitts (7) bemessen ist.

4. Verbindungselement nach einem der Ansprüche 1 bis 3, **dadurch gekennzeichnet, daß** der Paßabschnitt (6) einen Flächentraganteil von mindestens 25 % bezogen auf einen zylindrischen Abschnitt gleichen Durchmessers und gleicher Länge aufweist.

5. Verbindungselement nach einem der Ansprüche 1 bis 4, **dadurch gekennzeichnet, daß** der Außendurchmesser der Wulste (9) des Paßabschnitts (6) bis zu 20 % größer als der Außendurchmesser des Gewindeabschnitts (7) bemessen ist.

6. Verbindungselement nach einem der Ansprüche 1 bis 5, **dadurch gekennzeichnet, daß** die Wulste (9) und Rillen (10) des Paßabschnitts (6) umlaufend ausgebildet sind.

7. Verbindungselement nach einem der Ansprüche 1 bis 5, **dadurch gekennzeichnet, daß** die Wulste (9) und Rillen (10) des Paßabschnitts (6) als steigungsbehaftetes ein- oder mehrgängiges Wendelprofil (12) ausgebildet sind.

8. Verbindungselement nach Anspruch 2, **dadurch gekennzeichnet, daß** die axiale Länge des Dehnabschnitts (5, 8) mit mindestens 40 % der Klemmlänge des Verbindungselementes (1) bemessen ist.

9. Verbindungselement nach einem der Ansprüche 1 bis 8, **dadurch gekennzeichnet, daß** die Wulste (9) und Rillen (10) des Paßabschnitts (6) spanlos durch Kaltumformen und Kalibrieren geformt sind.

10. Verbindungselement nach Anspruch 9, **dadurch gekennzeichnet, daß** der Dehnabschnitt (5) des Verbindungselementes (1) spanlos gefertigt ist und eine Nachgiebigkeit gemäß der Formel

$$(G) \qquad \delta_S = \frac{4}{\P} * \frac{l_T}{E * d_T^2}$$

aufweist.

## Claims

1. A fastener (1) for connecting at least two components, especially a fitting elongation screw (2), a fitting threaded bolt or the like, comprising a shank (4) having at least one threaded portion (7) serving for fixing, at least one elongation portion (5) and at least one fitting portion (6) including a plurality of protrusions (9) and channels (10), the fitting portion (6) and the elongation portion (5) being spaced apart along the axis of the shank (4), wherein the stressed cross section of the elongation portion (5) is designed to be less than the stressed cross section of the threaded portion (7), and the stressed cross section of the fitting portion (6) being calculated from the root diameter ($d_{3R}$) of the channels (10) is designed to be at least 20 percent more than the stressed cross section of the elongation portion (5).

2. The fastener of claim 1, **wherein** the elongation portion (5) is designed to be continuously cylindrical without protrusions and channels.

3. The fastener of claim 1 or 2, **wherein** the stressed cross section of the elongation portion (5) is less than the stressed cross section of the threaded portion (7) up to 30 percent.

4. The fastener of one of the claims 1 to 3, **wherein** the fitting portion (6) has a surface bearing portion of at least 25 percent with respect to a cylindrical portion of the same diameter and the same length.

5. The fastener of one of the claims 1 to 4, **wherein** the outer diameter of the protrusions (9) of the fitting portion (6) is more than the outer diameter of said threaded portion (7) up to 20 percent.

**6.** The fastener of one of the claims 1 to 5, **wherein** the protrusions (9) and the channels (10) of the fitting portion (6) are designed and arranged to fully extend about the circumference of the shank.

**7.** The fastener of one of the claims 1 to 5, **wherein** the protrusions (9) and the channels (10) of the fitting portion (6) are designed and arranged to form an inclined spiral-like profile showing a single flight or a double flight.

**8.** The fastener of claim 2, **wherein** the axial length of the elongation portion (5, 8) is at least 40 percent of the clamping length of the fastener (1).

**9.** The fastener of one of the claims 1 to 8, **wherein** the protrusions (9) and the channels (10) of the fitting portion (6) are produced by cold forming and calibrating.

**10.** The fastener of claim 9, **wherein** the elongation portion (5) is produced without cutting, and it has a flexibility according to the equation

$$(G) \qquad \delta_S = \frac{4}{\pi} \times \frac{l_T}{E \times d_t^2}$$

**Revendications**

**1.** Élément de liaison (1) pour au moins deux éléments de machine ou de construction, en particulier vis calibrée à tige extensible (2), boulon fileté calibré (11) ou similaire, comportant une tige qui présente au moins un tronçon fileté (7) servant à la fixation, au moins un tronçon extensible (5) et au moins un tronçon calibré (6) constitué de bourrelets (9) et gorges (10), le tronçon calibré (6) étant prévu, par rapport au tronçon extensible (5), axialement décalé sur la tige (4), **caractérisé en ce que** la section de résistance du tronçon extensible (5) est dimensionnée inférieure à la section de résistance du tronçon fileté (7), et **en ce que** la section de résistance, calculée à partir du diamètre du noyau ($d_{3R}$) des gorges (10) du tronçon calibré (6), est dimensionnée supérieure d'au moins 20 % à la section de résistance du tronçon extensible (5).

**2.** Élément de liaison selon la revendication 1, **caractérisé en ce que** le tronçon extensible (5) est réalisé axialement cylindrique d'un bout à l'autre, sans bourrelets ni gorges.

**3.** Élément de liaison selon la revendication 1 ou 2, **caractérisé en ce que** la section de résistance du tronçon extensible (5) st dimensionnée jusqu'à 30 % de moins que la section de résistance du tronçon fileté (7).

**4.** Élément de liaison selon l'une des revendications 1 à 3, **caractérisé en ce que** le tronçon calibré (6) présente une fraction de surface portante d'au moins 25 % par rapport à un tronçon cylindrique de même diamètre et de même longueur.

**5.** Élément de liaison selon l'une des revendications 1 à 4, **caractérisé en ce que** le diamètre extérieur des bourrelets (9) du tronçon calibré (6) est dimensionné jusqu'à 20 % au-dessus du diamètre extérieur du tronçon fileté (7).

**6.** Élément de liaison selon l'une des revendications 1 à 5, **caractérisé en ce que** les bourrelets (9) et gorges (10) du tronçon calibré (6) sont réalisés périphériquement.

**7.** Élément de liaison selon l'un des revendications 1 à 5, **caractérisé en ce que** les bourrelets (9) et gorges (10) du tronçon calibré (6) sont réalisés comme profilé hélicoïdal (12) avec pas, à un ou plusieurs filets.

**8.** Élément de liaison selon la revendication 2, **caractérisé en ce que** la longueur axiale du tronçon extensible (5, 8) est dimensionnée avec au moins 40 % de la longueur de serrage de l'élément de liaison (1).

**9.** Élément de liaison selon l'une des revendications 1 à 8, **caractérisé en ce que** les bourrelets (9) et gorges (10) du tronçon calibré (6) sont formés sans enlèvement de copeaux, par formage à froid et calibrage.

**10.** Élément de liaison selon la revendication 9, **caractérisé en ce que** le tronçon extensible (5) de l'élément de liaison (1) est fabriqué sans enlèvement de copeaux et présente une élasticité selon la formule :

$$\text{(G)} \qquad \delta_S = \frac{4}{\P} * \frac{I_T}{E * d_T{}^2}$$

$$\delta_S = \frac{4}{\P} * \frac{I_T}{E * d_T{}^2}$$

Fig. 1

Fig. 2

Fig. 4

Fig. 3